# EUROPÄISCHE PATENTANMELDUNG

(11) **EP 0 718 241 A2**
(43) Veröffentlichungstag der Anmeldung: **26.06.1996**
(21) Anmeldenummer: 95119890.2
(22) Anmeldetag: 16.12.1995
(51) Int. Cl.: C03B 3/00, C03B 5/03, C03B 5/193, C03B 5/20, C03B 5/26, C03B 7/06, B09B 3/00, A62D 3/00

(54) **Wannen-Schmelzofen zum Inertisieren von Schadstoffen durch Verglasen**

(30) Priorität: 25.12.1994 DE 4446576
(71) Anmelder: Beteiligungen Sorg GmbH & Co. KG, D-97816 Lohr (DE)
(72) Erfinder: Pieper, Helmut, Dipl.-Ing., D-97816 Lohr am main (DE); Rott, Lothar, D-97816 Lohr am main (DE); Bucar, Matjaz, D-97816 Lohr am Main (DE)
(74) Vertreter: Zapfe, Hans, Dipl.-Ing.

(57) **Zusammenfassung**

Ein Wannen-Schmelzofen zum Inertisieren von nicht brennbarem, schadstoffhaltigem Beschickungsgut (14) mit Anteilen an Metallen und weniger als 10 Gewichtsprozent Kohlenstoff durch Verglasen mit glasbildenden Zuschlagstoffen unter Bildung einer glashaltigen Schmelze (9) besitzt eine Beschickungsvorrichtung (11) und eine Wanne (1), auf deren Wannenrand (6) eine Ofendecke (7) aufliegt, Elektroden (8) zum Beheizen der Schmelze (9), Mittel zum Zuführen von Oxidationsgasen in die Schmelze (9) sowie einen beheizbaren Überlaufkanal (16) für den Abzug der Schmelze (9). Zur Verringerung der Eluatwerte sind als Mittel zum Zuführen der Oxidationsgase im Boden der Wanne (1) Düsen (12) angeordnet, und die Elektroden tauchen von oben in die Schmelze (8) ein. Bevorzugt sind die Düsen (12) in von innen nach außen ansteigenden Innenflächen (2) des Bodens angeordnet.

## Beschreibung

Die Erfindung betrifft einen Wannen-Schmelzofen zum Inertisieren von nicht brennbarem, schadstoffhaltigem Beschickungsgut mit Anteilen an Metallen und weniger als 10 Gewichtsprozent Kohlenstoff durch Verglasen mit glasbildenden Zuschlagstoffen unter Bildung einer glashaltigen Schmelze, mit einer Beschickungsvorrichtung und einer Wanne, auf deren Wannenrand eine Ofendecke aufliegt, mit Elektroden zum Beheizen der Schmelze, mit Mitteln zum Zuführen von Oxidationsgasen in die Schmelze sowie mit einem beheizbaren Überlaufkanal für den Abzug der Schmelze.

Durch den Aufsatz von Mayer-Schwinning u.a. "Verglasungsverfahren zur Inertisierung von Rückstandsprodukten aus der Schadgasbeseitigung bei thermischen Abfallbeseitigungsanlagen", veröffentlicht in VGB Kraftwerkstechnik 70 (1990), Heft 4, Seiten 332 bis 336, und die DE 39 12 311 C1 sind Wannen-Schmelzöfen für Verglasungszwecke bekannt, die jedoch keine Mittel zum Einleiten von Oxidationsgasen in die Glasschmelze besitzen.

Einerseits hat sich die Verglasung von umweltgefährdenden Abfallstoffen als äußerst sichere Konservierungsmethode für derartige Abfallstoffe erwiesen, andererseits sind aber bei der Verfahrensdurchführung Bedingungen zu beachten, so daß der langzeitige Erfolg der Verglasung nicht in Frage gestellt wird. Ein möglicher Schwachpunkt der Verglasung ist die Freigabe von löslichen Komponenten durch Auswaschen mit Wasser, ein Vorgang, der auch als Elution bezeichnet wird. Der Umfang der Elution hängt unter anderem von der Konzentration der löslichen Stoffe und deren Löslichkeit an sich ab, sowie auch von der spezifischen Oberfläche der Glasmasse (Glasbruch, Aufmahlung) und vom Atomordnungszustand des Glases (kristallin, amorph).

Der vorstehend genannte Aufsatz von Mayer-Schwinning u.a. beschreibt einige Eluatanalysen und zeigt auf, daß im großen Ganzen die Schadstoffkonzentrationen in die Eluaten den gesetzlichen Vorschriften und Verordnungen entsprechen.

Nun enthalten Schadstoffe der vorstehend genannten Art häufig mehr oder weniger Kohlenstoff, wobei der Kohlenstoffgehalt in der Regel zwischen etwa 3 und 4 Gewichtsprozent liegt, aber gelegentlich auch 10 Gewichtsprozent erreichen kann. Dieser Kohlenstoff entsteht dadurch, daß einige Heizkraftwerke und Müllverbrennungsanlagen bei unterstöchiometrischen Verbrennungsbedingungen betrieben werden, um den Anteil an N0ₓ möglichst gering zu halten. Hierbei entsteht Kohlenstoff in Form von feinsten Partikeln. Zusätzlich wird gelegentlich in derartige Anlagen auch noch Kohlenstaub eingeblasen, der durch Zermahlen von Aktivkohle entstanden ist, die mit anderen Umweltgiften, darunter auch mit Schwermetallen und Schwermetallverbindungen belastet ist. Die hierbei besonders belastenden Schwermetalle sind Kupfer, Zink, Eisen, Nickel und Blei.

Die Anwesenheit von Kohlenstoff in der Schmelze führt jedoch zu Reduktionsvorgängen und ist kontraproduktiv, weil es dadurch zum Ausfallen von Metallen kommt, die mindestens teilweise in der Schmelze kolloidal gelöst bleiben und zu einer Dunkelfärbung der Schmelze führen. Die betreffenden Metallanteile in der Schmelze können jedoch beim Verbringen der Glasmasse auf eine Deponie ausgewaschen, d.h. eluiert werden und dadurch eine Umweltgefahr bilden. Dieses Verhalten wird durch die weiter oben beschriebene Eluatanalyse untersucht, und derartige Versuche haben gezeigt, daß bei einem unter reduzierenden Bedingungen durchgeführten Verglasungsverfahren die Eluatwerte für Schwermetalle ansteigen.

Durch die US-PS 3 592 151 ist ein schachtförmiger Müllverbrennungsofen bekannt, in dessen Sumpf geschmolzenes Glas vorgelegt und mit eingetauchten Elektroden und gegebenenfalls fossilien Brennern aufgeschmolzen und in geschmolzenem Zustand gehalten wird. Über dem geschmolzenen Glas, das einen herkömmlichen Ofenrost ersetzen soll, wird Müll mit einer dem Zufall überlassenen Zusammensetzung verbrannt, wobei nicht flüchtige und teilweise gefährliche Verbrennungsprodukte, mit Ausnahme von Metallen, vom Glas aufgenommen werden und zusammen mit diesem eine Schlacke bilden. Mindestens ein Teil der Verbrennungsluft wird dabei mittels Düsen von unten durch die Schlacke geleitet und dadurch vorgewärmt. Da die Verbrennungsluft jedoch in großen Mengen benötigt wird, wird der Schlacke eine entsprechend große Wärmemenge entzogen. Dabei wird die Schlacke durch Glasscherben aus dem Müll vermehrt, so daß der Zuwachs an Schlacke und geschmolzenem Metall von Zeit zu Zeit abgelassen werden muß. Eine reproduzierbare Prozeßführung mit kontrollierbar niedrigen Eluatwerten ist nicht angegeben.

Die Erfindung befaßt sich nicht mit einem derartigen Müll-Verbrennungsofen, sondern mit einem Wannen-Schmelzofen für die Entsorgung von Beschickungsgut, das allenfalls maximal 10 Gewichtsprozent Kohlenstoff enthält, also - für sich genommen - keinen Brennstoff bildet.

Durch die W0 93/02974 ist ein Wannen-Schmelzofen der eingangs beschriebenen Gattung bekannt, mit dem schadstoffhaltige Abfälle mit organischen bzw. kohlenstoffhaltigen Bestandteilen unter Sauerstoffeinleitung in die Schmelze oxidiert und verglast werden können. Eine Aufgabevorrichtung für das Beschickungsgut ist zentral, d.h. in der Ofenachse angeordnet. Auf gegenüberliegenden Seiten der Wanne befinden sich unterhalb des Schmelzenspiegels plattenförmige Elektroden. Mit Abstand oberhalb des Wannenbodens befindet sich mindestens ein waagrechtes, perforiertes Rohr aus Inconel, durch das ein Vorhang aus Gasblasen zwischen den Elektroden erzeugt wird, um den spezifischen elektrischen Widerstand der Schmelze zu erhöhen. Die Gasblasen haben dabei die zusätzliche Wirkung einer Strömungsbewegung in der Schmelze und einer Verteilung des Beschickungsguts unter dessen gleichzeitiger Beheizung von unten zum Zwecke eines schnellen Aufschmelzens bei relativ niedrigeren Temperaturen. Die perforierten Rohre lassen sich jedoch auch durch das durchgeleitete sauerstoffhaltige Gas nicht ausreichend kühlen, da dies zu einem Verstopfen der Löcher führen würde, sie sind also bei hohen Temperaturen der aggressiven Wirkung des Glases und des Sauerstoffs ausgesetzt, wodurch die Lebensdauer insbesondere bei hohem Sauerstoffanteil drastisch herabgesetzt wird. Außerdem nimmt infolge der relativ hohen Lage der perforierten Rohre die darunter liegende Schmelzenmenge, in der sich metallische Komponenten ansammeln, nur sehr ungenügend an der Umwälzung der Schmelze und an der Oxidation teil, so daß sich die Schmelze durch Lösung der Metalle dunkel färbt und eluierbare Komponenten enthält.

Der Erfindung liegt die Aufgabe zugrunde einen Wannen-Schmelzofen der eingangs beschriebenen Gattung anzugeben, der auch mit hochsauerstoffhaltigen Gasen bei hohen Schmelzentemperaturen betrieben werden kann und der die Bildung von Eluaten aus nicht oxidierten Komponenten des Beschickungsguts verringert.

Die Lösung der gestellten Aufgabe geschieht bei dem eingangs beschriebenen Wannen-Schmelzofen erfindungsgemäß dadurch, daß als Mittel zum Zuführen der Oxidationsgase im Boden der Wanne Düsen angeordnet sind und daß die Elektroden von oben in die Schmelze eintauchen.

Durch die vom Wannenboden ausgehende oxidative Betriebsweise wird eine kolloidale Lösung der Metalle in der Schmelze verringert. Darüber hinaus dient der vom Boden aufsteigende Strom von Gasblasen zum Homogenisieren des gesamten Bades, so daß auch bei großen Badtiefen im Bereich eines Überlaufkanals für die Schmelze hohe Temperaturen erzielt werden können. Die aufsteigenden Gasblasen erzwingen eine Umwälzbewegung innerhalb der gesamten Schmelze. Dadurch wird dem Nachteil einer gefärbten Schmelze entgegen gewirkt, ein Vorgang, der bereits weiter oben beschrieben wird. Vergleichsweise durchgeführte Eluatanalysen haben gezeigt, daß durch den erfindungsgemäßen Wannen-Schmelzofen weniger Schwermetalle und Schwermetallverbindungen aus dem Endprodukt ausgewaschen werden können. Durch die Anordnung der Düsen im Wannenboden kann die Schmelze auch beim Einleiten von Sauerstoff auf einem deutlich höheren Temperaturniveau gehalten werden, als beim Stand der Technik.

Es ist dabei im Zuge weiterer Ausgestaltungen des Erfindungsgegenstandes besonders vorteilhaft, wenn:
- die Düsen in von innen nach außen ansteigenden Innenflächen des Bodens angeordnet sind, weil dadurch eine gute Strömungsführung erfolgt,
- die Düsen um eine in der Achse der Wanne angeordnete, verschließbare Abzugsöffnung verteilt angeordnet sind, weil dadurch eine torusförmige Strömung erzielt wird, und wenn
- die über der Ofendecke angeordnete Beschickungsvorrichtung so ausgebildet ist, daß das Beschickungsgut über den Düsen an mindestens zwei Stellen dezentral auf die Schmelze aufgebracht wird, weil dadurch eine raschere Verteilung des Schmelzgutes auf der Schmelzenoberfläche herbeigeführt wird.

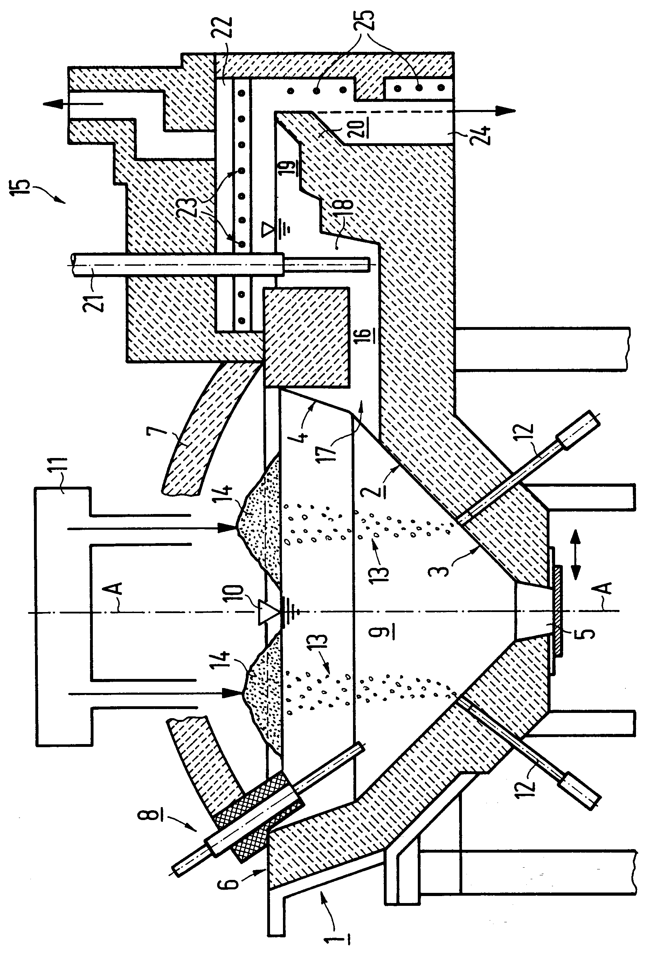

Ein erfindungsgemäßer Wannen-Schmelzofen wird nachfolgend anhand der einzigen Figur näher erläutert, die einen Vertikalschnitt durch die Wanne und durch den zugehörigen Überlaufkanal für die Schmelze zeigt.

Gemäß der Figur besitzt die Wanne 1 eine Innenfläche 2, die aus aneinanderstoßenden Pyramidenstumpfflächen 3 und 4 zusammengesetzt ist, die eine gemeinsame Achse A-A besitzen. Konzentrisch zu dieser Achse verläuft auch eine Abzugsöffnung 5 für sich etwa ansammelnde Metalle. Die Wanne 1 besitzt einen oberen umlaufenden Wannenrand 6, auf den eine Ofendecke 7 aufgelegt ist. Im Bereich einer Trennfuge zwischen dem Wannenrand 6 und der Ofendecke 7 befindet sich - auf dem Umfang äquidistant verteilt - eine Anzahl von Elektroden 8, von denen nur eine gezeigt ist, und die von oben in eine Schmelze 9 eintauchen, die nach oben bis zu einem konstruktiv vorgegebenen Flüssigkeitsstand 10 reicht.

Über der Ofendecke 7 befindet sich eine hier nur schematisch angedeutete Beschickungsvorrichtung 11 für das Beschickungsgut, das aus den zu entsorgenden Schadstoffen besteht. Allenfalls können in Sonderfällen glasbildende Zuschlagstoffe beigemischt werden. In der Beschickungsvorrichtung 11 findet jedenfalls kein Verbrennungsvorgang statt.

Im Boden der Wanne 1 sind zwei Düsen 12 angeordnet, die an eine hier nicht gezeigte Gasquelle mit sauerstoffhaltigen Gasen angeschlossen sind und aus deren Mündungen je ein Strom von aufsteigenden Gasblasen 13 erzeugt wird. Die Ausbildung der Beschickungsvorrichtung 11 und die Anordnung der Düsen 12 wird dabei zweckmäßig so gewählt, daß die reaktiven Gasblasen 13 von unten auf das Beschickungsgut 14 auftreffen, das auf der Schmelze schwimmt. Dadurch werden - was hier nicht besonders gezeigt wird - die Schüttungen des Beschickungsguts 14 auseinander getrieben, so daß in Wirklichkeit die gesamte Oberfläche der Schmelze 19 von dem Beschickungsgut bedeckt ist.

Die Düsen 12 werden auch als "Bubbler" bezeichnet. Während in der Figur nur zwei solcher "Bubbler" gezeigt sind, können natürlich auf den Umfang der Wanne 1 verteilt, zahlreiche derartiger "Bubbler" vorgesehen werden. Diese haben mittels der aufsteigenden Gasblasen die Wirkung, daß auch kältere Schmelze vom Boden der Wanne 1 nach oben transportiert wird und über den Wirkungsbereich der Elektroden 8 wieder zum Boden der Wanne 1 gelangt. Dadurch wird nicht nur eine Homogenisierung der Temperaturverteilung erreicht, sondern auch eine intensivere Wärmeabgabe von der Schmelze 9 an das Beschickungsgut 14 erzwungen.

Seitlich und radial an die Wanne 1 angesetzt befindet sich eine Abzugseinrichtung 15, in der sich ein waagrechter Überlaufkanal 16 befindet, dessen Eintrittsöffnung 17 mit ihrer tiefsten Stelle unterhalb einer waagrechten Ebene liegt, die durch die unteren Enden der Elektroden 8 definiert wird. Vom Überlaufkanal 16 führt ein Aufstiegskanal 18 über einen waagrechten Kanalabschnitt 19 zu einem Wehr 20, dessen Oberkante den Flüssigkeitsstand der Schmelze 9 bestimmt. Im Aufstiegskanal 18 befindet sich noch das wirksame Ende einer weiteren Heizelektrode 21, und über dem Aufstiegskanal 18 und dem Kanalabschnitt 19 sowie dem Wehr 20 befindet sich eine größtenteils nach unten offene Heizkammer 22, in der mehrere Strahlungsheizelemente 23 in Form waagrechter Heizstäbe angeordnet sind. Auch auf der Außenseite der sich an das Wehr 20 anschließenden Fallstrecke 24 befinden sich weitere Strahlungsheizelemente 25 in Form der bereits beschriebenen waagrechten Heizstäbe.

Durch die Wirkung der aufsteigenden Gasblasen 13 wird auch vor der Eintrittsöffnung 17 stets eine ausreichende Temperatur in der Schmelze aufrechterhalten, so daß ein kontinuierlicher Ablauf der Schmelze nach Maßgabe der zugeführten Menge des Beschickungsguts gewährleistet ist. Es bleibt noch festzuhalten, daß typische Gasmengen für jede Düse 12 bei etwa 0,5 bis 0,6 Normalkubikmetern Luft je Stunde liegen. Eine solche, äußerst geringe Luftmenge reicht für die Unterhaltung eines Verbrennungsvorgangs größerer Müllmengen nicht aus; die Einleitung von reinem Sauerstoff verbietet sich bei der Müllverbrennung, weil der Müll alsdann explosionsartig verbrennen würde.

## Patentansprüche

1. Wannen-Schmelzofen zum Inertisieren von nicht brennbarem, schadstoffhaltigem Beschickungsgut (14) mit Anteilen an Metallen und weniger als 10 Gewichtsprozent Kohlenstoff durch Verglasen mit glasbildenden Zuschlagstoffen unter Bildung einer glashaltigen Schmelze (9), mit einer Beschickungsvorrichtung (11) und einer Wanne (1), auf deren Wannenrand (6) eine Ofendecke (7) aufliegt, mit Elektroden (8) zum Beheizen der Schmelze (9), mit Mitteln zum Zuführen von Oxidationsgasen in die Schmelze (9) sowie mit einem beheizbaren Überlaufkanal (16) für den Abzug der Schmelze (9), **dadurch gekennzeichnet**, daß als Mittel zum Zuführen der Oxidationsgase im Boden der Wanne (1) Düsen (12) angeordnet sind und daß die Elektroden von oben in die Schmelze (8) eintauchen.

2. Wannen-Schmelzofen nach Anspruch 1, **dadurch gekennzeichnet**, daß die Düsen (12) in von innen nach außen ansteigenden Innenflächen (2) des Bodens angeordnet sind.

3. Wannen-Schmelzofen nach Anspruch 2, **dadurch gekennzeichnet**, daß die Düsen (12) um eine in der Achse (A-A) der Wanne (1) angeordnete, verschließbare Abzugsöffnung (5) verteilt angeordnet sind.

4. Wannen-Schmelzofen nach Anspruch 1, **dadurch gekennzeichnet**, daß die über der Ofendecke (7) angeordnete Beschickungsvorrichtung (11) so ausgebildet ist, daß das Beschickungsgut (14) über den Düsen (12) an mindestens zwei Stellen dezentral auf die Schmelze (9) aufgebracht wird.
